# EUROPÄISCHE PATENTSCHRIFT

(11) **EP 1 026 108 B1**
(45) Veröffentlichungstag und Bekanntmachung des Hinweises auf die Patenterteilung: **23.06.2004**
(21) Anmeldenummer: 00890025.0
(22) Anmeldetag: 27.01.2000
(51) Int. Cl.: B65G 57/18

(54) **Verfahren und Anlage zur Bildung von Kastenstapeln für Schnittgut**
Method and machine for stacking workpieces to be cut
Procédé et dispositif pour la formation d'empilement pour matériau de coupe

(30) Priorität: 02.02.1999 AT 1300599
(43) Veröffentlichungstag der Anmeldung: 09.08.2000
(73) Patentinhaber: Springer Maschinenfabrik AG, 9360 Friesach (AT)
(72) Erfinder: Roth, Heinz Ing., 9360 Friesach (AT)
(74) Vertreter: Gibler, Ferdinand, Dipl.Ing. Dr.

(56) Entgegenhaltungen:
- DE-B- 1 057 974
- US-A- 3 793 568
- US-A- 4 261 110
- US-A- 4 663 860

## Beschreibung

Die Erfindung betrifft ein Verfahren zur Bildung von Kastenstapeln für Schnittgut, vorzugsweise kantige Holzbretter, mit unterschiedlicher Länge, wobei das Schnittgut durch Stauquerförderung zu Lagen gesammelt wird und die stirnseitigen Enden des Schnittguts abwechselnd nach einer ersten und nach einer zweiten Stapelkante ausgerichtet werden, wodurch zick-zack-artige Lagen gebildet werden, welche durch eine Übergabevorrichtung auf einem Stapeltisch, vorzugsweise unter Zwischenlage von Distanzlatten, gestapelt werden.

Bei bisher bekannten Verfahren dieser Art ist es üblich, beispielsweise aus prismiertem Schnittholz unterschiedlicher Länge Stapeln mit einheitlicher Länge zur Aufbewahrung in einer Trockenkammer zu bilden, die auf die jeweilige Länge des Schnittholzes ausgelegt sind.

Die einzelnen Lagen werden mit gleichen Abmessungen bereitgestellt, indem die Bretter abwechselnd nach der linken und der rechten Stapelkante ausgerichtet werden. Bei der Lieferung der Bretter sind diese zunächst nach einer Ausrichtkante, z.B. nach links, orientiert. Jedes zweite Brett wird in dieser Lage belassen, während die dazwischenliegenden Bretter über einen Rollgang soweit verschoben werden, bis die rechte Kante einen Anschlag erreicht, der von der linken Kante in Stapellänge beabstandet ist.

Diese Art der Stapelbildung wird hauptsächlich in Skandinavien aber auch in Mitteleuropa angewandt.

Weiters ist es bekannt, das Schnittholz auf einer vorher angeordneten Schnittholz-Sortieranlage nach gleicher Stärke und gleichem Breitenbereich aber mit unterschiedlicher Länge zu sortieren. Diese Sortimente werden mit geeigneten Einrichtungen aus den Sortierboxen transportiert und gelangen dann vereinzelt hintereinander auf einen ersten Bereich der Stapelanlage, der einen Stauquerförderer ausbildet.

Aus einer angestauten Bretterlage werden mittels eines Zuteilers die Bretter einem nachfolgenden Bretterförderer mit Mitnehmer einzeln zugeteilt, wobei vor jedem Mitnehmer ein Brett zu liegen kommt. Die Mitnehmer sind dabei als kurze Rollen mit senkrechten Achsen ausgebildet. Die Kette dieses Querförderers ist so ausgebildet, daß die Kettenstücke zwischen den Mitnehmern unterschiedlich hoch sind, sodaß sich hohe und niedrige Mitnehmer abwechseln und der Höhenunterschied zwischen einem niedrigen und einem hohen Mitnehmer beispielsweise 25 mm beträgt.

Der Querförderer durchläuft einen Ausrichtrollengang mit etwa 2m langen Rollen, wobei die Rollenmitnehmer und die Bretter über den quer wirkenden Rollengang geschoben werden. Durch die unterschiedlich hohen Kettenstücke des Querförderers wird jedes zweite Brett auf der ursprünglichen Ausrichtkante belassen, während die dazwischenliegenden Bretter durch den Rollgang bis zum Anschlag ausgerichtet werden, wodurch sich eine sogenannte Zick-Zack-Lagenbildung ergibt.

Der Mitnehmer-Querförderer übergibt die so ausgerichteten Bretter einzeln einem anschließenden Lagenbildungs-Querförderer. Dieser fährt bei jeder Brettübergabe einen kurzen Schritt, welcher je nach Brettbreite einstellbar ist, und es bildet sich darauf eine fertige Bretterlage.

Wenn die Lagebreite erreicht ist, startet eine mehrarmige Übergabevorrichtung, auch Übergabezunge genannt, und übergibt die Lage an den Stapel-Hubtisch. Dieses bekannte Verfahren der Zick-Zack-Stabelbildung hat sich seit langem bewährt, ist aber nur begrenzt leistungsfähig.

Es ist eine Leistung von hundert Stück schmalen Brettern je Minute als Auslegungsgrenze erreichbar, wobei die Stapelbreite mindestens 2,0 m beträgt. Für breitere Bretter und schmälere Lagenbreite ist die Leistung geringer. Bei einem Maschinenausnutzungsfaktor von 75% läßt sich eine effektive Leistung von 75 Brettern je Minute erzielen, wobei in der Stillstandszeit von 25% außer den betriebsbedingten Störungen auch noch die Zeit für den Sortiment- und Stapel-Wechsel beinhaltet ist.

Eine vergleichbare Vorrichtung zur schichtweisen Stapplung von gesägtem Holz zum Zwecke der Trocknung, jedoch mit deutlich geringerer Leistung, ist aus der DE 10 57 974 A bekannt. Der Erfindung liegt die Aufgabe zugrunde, die Leistungsfähigkeit einer Stapelanlage und somit die Anzahl der pro Zeiteinheit fertigstellbaren Stapel zu erhöhen.

Erfindungsgemäß wird dies dadurch erreicht, daß die Schnittgutstücke jeder durch die Stauquerförderung aufgestauten Schnittgut-Stapellage unmittelbar nach der Stauquerförderung und während ihrer Förderbewegung in fertigen Lagen gesammelt und transportiert werden, und daß die zick-zack-artige Ausrichtung der Schnittgutstücke während ihres Weitertransportes zur Übergabevorrichtung erfolgt, wobei zur zick-zack-artigen Ausrichtung der Schnittgutstücke während eines Förderabschnitts jedes zweite Schnittgutstück einer Lage um eine vorbestimmte Querverschiebungslänge quer zur Förderrichtung verschoben wird, daß in einem darauffolgenden Förderabschnitt die dazwischenliegenden, nicht verschobenen Schnittgutstücke gegen ein seitliches Verschieben gesichert werden, welche dadurch entlang der ersten Stapelkante ausgerichtet bleiben, daß die zuvor um eine vorbestimmbare Distanz verschobenen Schnittgutstücke durch eine Ausrichtvorrichtung entlang der zweiten Stapelkante ausgerichtet werden, und daß die so ausgerichteten Stapellagen der Übergabevorrichtung zugeführt werden.

Ohne Querförderer mit Mitnehmer kann die Manipulation der Schnittgutstücke mit kleineren Brettabständen vorgenommen werden, wodurch sich ein höherer Durchsatz an Schnittgutstücken erzielen läßt. Die während der Förderbewegung stattfindende Querverschiebungsbewegung mit kleineren Brettabständen erhöht die Leistungsfähigkeit des erfindungsgemäßen Verfahrens. Auch bei den bekannten Verfahren findet die Querverschiebung während der Förderbewegung statt, die Bretter haben aber durch den Querförderer mit Mitnehmer größere Abstände.

Weiters betrifft die Erfindung eine Anlage zur Bildung von Kastenstapeln mit einer ersten und einer zweiten Stapelkante für Schnittgut, vorzugsweise, Holzbretter, mit einem Stauquerförderer, einer Anschlagvorrichtung, einem an diese anschließenden Zwischenquerförderer, einer Übergabevorrichtung und einem Stapeltisch, insbesondere zur Durchführung des erfindungsgemäßen Verfahrens.

Aufgabe der Erfindung ist es, die Leistungsfähigkeit und somit die Anzahl der per Zeiteinheit erzeugbaren Stapellagen gegenüber bekannten Anlagen zu steigern.

Erfindungsgemäß wird dies dadurch erreicht, daß der Zwischenquerförderer eine höhere Fördergeschwindigkeit als der Stauquerförderer aufweist, daß auf einer Seite des Zwischenquerförderers eine Vorrichtung zur Querverschiebung jedes zweiten Schnittgutstücks um eine vorbestimmte Querverschiebungslänge vorgesehen ist, daß - in Förderrichtung gesehen - nach der Querverschiebungsvorrichtung eine Vorrichtung zur Verhinderung einer Querverschiebung der dazwischenliegenden, entlang der ersten Stapelkante ausgerichteten Schnittgutteile vorgesehen ist, welche mit einer Ausrichtvorrichtung zur Ausrichtung der um die Querverschiebungslänge verschobenen Schnittgutstücke entlang der zweiten Stapelkante in Wirkzusammenhang steht.

Dadurch wird die Ausbildung von Stapellagen während der fortlaufenden Förderbewegung und somit eine erhöhte Stapelbildungsrate ermöglicht.

Gemäß einer weiteren Ausbildung der Erfindung kann vorgesehen sein, daß vor der Übergangsstelle zwischen dem, vorzugsweise mehrarmigen, Stauquerförderer und dem Zwischenquerförderer (Dachkettenförderer) eine Lagenbildungsvorrichtung vorgesehen ist, welche senkbare, in Förderrichtung verstellbare Anschläge und eine im Abstand einer Lagenbreite angeordnete Klemmvorrichtung aufweist.

Mit dieser Lagenbildungsvorrichtung kann eine exakte Ausbildung der fertigen Bretterlagen erzielt werden.

Weiters kann gemäß einer weiteren Ausbildung der Erfindung vorgesehen sein, daß der Zwischenquerförderer aus einem Dachkettenförderer gebildet ist, und daß seitlich des Dachkettenförderers eine Einweisvorrichtung, vorzugsweise ein in schrägem Winkel zur Förderrichtung angestelltes Einweisförderband, angeordnet ist, die eine Ausrichtung der Stückgutteile entlang der ersten Stapelkante vornimmt, sodaß während der Förderbewegung eine sehr präzise Ausrichtung entlang der ersten Stapelkante erzielt werden kann.

Um weiters den Ausrichtvorgang der jeweils zweiten Stückgutstücke entlang der zweiten Stapelkante vorzubereiten, kann gemäß einer weiteren Variante der Erfindung vorgesehen sein, daß die Querverschiebungsvorrichtung aus einem parallel zur Förderrichtung der Anlage entlang eines Abschnitts verschiebbaren Schlitten mit quer zur Förderrichtung ausgerichteten und verschiebbaren Verschiebefingern gebildet ist, welcher Schlitten in Förderrichtung mit einer der Fördergeschwindigkeit des Zwischenquerförderers entsprechenden Geschwindigkeit und gegen die Förderrichtung mit einer höheren Eilganggeschwindigkeit bewegbar ist.

Alternativ dazu kann die Querverschiebevorrichtung aus einer parallel zur Förderrichtung rotierbaren Trommel mit einer darauf angebrachten, schneckenförmigen Einschiebenocke gebildet sein, die jedes zweite Schnittgutstück quer zur Förderrichtung verschiebt und wobei der Umfang der Einschiebnocke sich mit einer der Fördergeschwindigkeit des Zwischenquerförderers entsprechenden Geschwindigkeit bewegt.

Die Nocke ist dabei so dimensioniert, daß sie sich über einen Umfangswinkel von 180° erstreckt. Die Trommel führt dabei eine Umdrehung aus, während der Zwischenförderer (Dachkettenförderer) den Weg von zwei Brettbreiten zurücklegt und verschiebt bei dieser Umdrehung ein Brett um ungefähr 100 mm. Durch die Schneckenform der Einschiebenocke bleibt der Berührungspunkt zwischen Nocke und Brett während des Einschiebevorganges gleich, das heißt der Umfang der Schnecke und der Zwischenförderer laufen in Förderrichtung synchron. Durch die unterschiedlichen Brettbreiten der einzelnen Kastenstapel muß die Pause nach einer Umdrehung der Einschiebetrommel bis zum Beginn der nächsten Umdrehung verschieden groß sein. Die Umstellung auf einen anderen Arbeitszyklus erfolgt nach Passieren der letzten Bretter eines Stapels vor Beginn des neuen Sortiments (Abstand 5,0 m).

Zweck dieser Einrichtung ist das Einschieben jedes zweiten Brettes um eine vorbestimmbare Querverschiebungslänge, z.B. 100mm. Der eigentliche Ausrichtvorgang der solcherart verschobenen Bretter, die an der zweiten Stapelkante ausgerichtet werden, kann dann besonders exakt ausgeführt werden, wenn in weiterer Ausbildung der Erfindung vorgesehen ist, daß die Ausrichtvorrichtung aus einem schräg zur Förderrichtung verlaufenden Ausrichtrollengang und einem seitlich zu diesem, vorzugsweise schräg, angeordneten Anschlagförderband gebildet ist, wobei die bereits verschobenen Schnittgutstücke in Richtung zur zweiten Stapelkante verschoben werden, welche durch das Anschlagförderband definiert ist.

Um eine effiziente Stapelung zu gewährleisten kann weiters vorgesehen sein, daß die Übergabevorrichtung einen, vorzugsweise mehrarmigen, Lagenübergabe-Querförderer, eine, vorzugsweise mehrarmige, Übergabezunge und einen Schieber zur Ausrichtung der längsseitigen Stapelkante umfaßt, wobei der Lagenübergabe-Querförderer mit der Geschwindigkeit des Stauquerförderers bewegbar ist.

Schließlich kann eine Verstellbarkeit der erfindungsgemäßen Anlage auf eine kürzere Stapellänge dadurch erzielt werden, daß gemäß einer weiteren Ausführungsform der Erfindung vorgesehen ist, daß das Einweisförderband, die Querverschiebungsvorrichtung und die Vorrichtung zur Verhinderung der Querverschiebung sowie das Anschlagförderband mit Teilen der Ausrichtvorrichtung jeweils auf einem gemeinsamen Verschieberahmen befestigt sind.

Nachfolgend wird die Erfindung anhand des in den beigeschlossenen Zeichnungen dargestellten Ausführungsbeispiels eingehend erläutert. Es zeigt dabei
Fig. 1 einen Grundriß einer Ausführungsform der erfindungsgemäßen Anlage;
Fig.2 eine schematische Darstellung des erfindungsgemäßen Verfahrens unter Anwendung der Anlage gemäß Fig.1;
Fig.3 einen Grundriß einer weiteren Ausführungsform der erfindungsgemäßen Anlage und
Fig.4 eine schematische Darstellung des erfindungsgemäßen Verfahrens unter Anwendung der Anlage gemäß Fig.3.

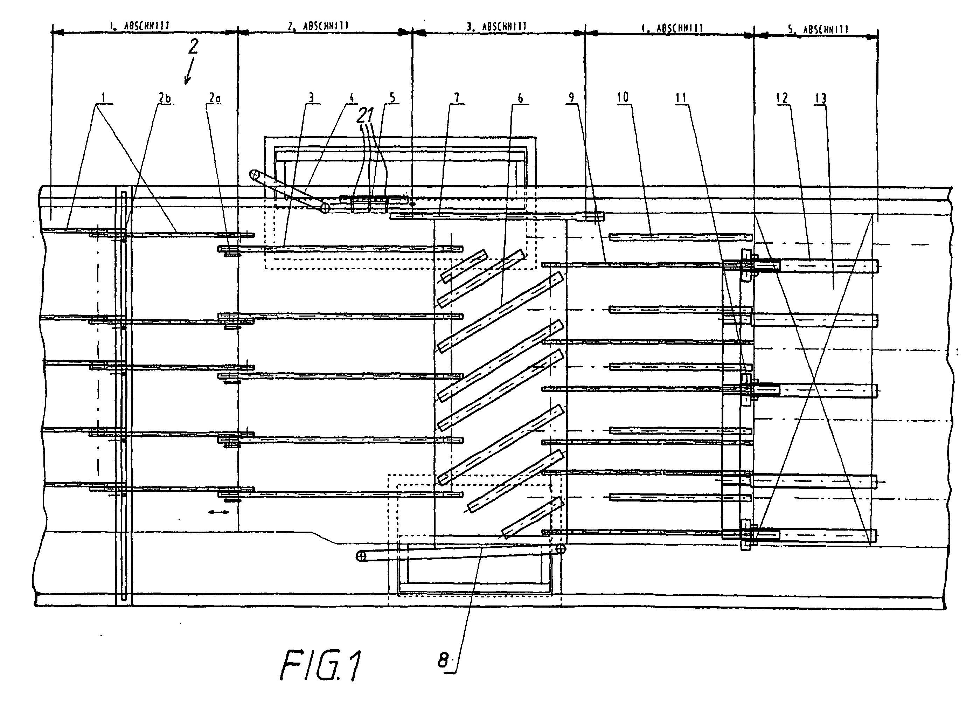

In Fig. 1 ist eine Anlage zur Bildung von Kastenstapeln für Schnittgut dargestellt, deren Hauptanwendungsgebiet die Stapelung von kantigem Schnittholz oder Holzbrettem unterschiedlicher Länge zu Stapeln mit einer einheitlichen Länge ist. Beispielsweise kann eine Stapellänge von 5,5m bei Einzelbrettlängen von 2,4m bis 5,4m gewünscht sein, um diese Stapel in Trockenkammern mit vorgegebenen Abmessungen möglichst effizient unterzubringen und die aufgebrachte Trockenwärme möglichst vollkommen auszunutzen. Neben Holzbrettern kann die erfindungsgemäße Anlage für jede andere Art von Schnitt- oder Stückgut für die Errichtung von Stapeln mit gleicher Länge eingesetzt werden. Bevor die Stapel gebildet werden, wird z.B. das Schnittholz auf einer Schnittholz-Sortieranlage nach gleicher Stärke und gleichem Breitenbereich aber unterschiedlichen Längen sortiert.

Jeder fertige Stapel hat - quer zur Längsrichtung der Schnittgutstücke gesehen - eine erste und eine zweite Stapelkante. Das Schnittgut wird über einen Stauförderer 1 in der für eine Stapellage 30 vorgesehenen Anzahl gesammelt und die stirnseitigen Enden der Schnittgutstücke abwechselnd nach der ersten und nach der zweiten Stapelkante ausgerichtet, wodurch zick-zack-artige Lagen gebildet werden, welche durch eine Übergabevorrichtung 9, 10, 11 auf einem Stapeltisch 12 unter Zwischenlage von Distanzlatten gestapelt werden.

Dazu weist die Anlage unter anderem eine Lagenbildungsvorrichtung 2 bestehend aus senkbaren, in der Förderrichtung verstellbaren Anschlägen 2a und einer im Abstand einer Lagenbreite angeordneten Klemmvorrichtung 2b, einen an diese anschließenden Zwischenquerförderer 3 und nach der Übergabevorrichtung 10 einen Stapeltisch 12 auf, deren Funktion nachfolgend beschrieben wird.

Erfindungsgemäß ist dabei vorgesehen, daß der Zwischenquerförderer 3 eine höhere Fördergeschwindigkeit als der Stauquerförderer 1 aufweist und auf einer Seite des Zwischenquerförderers 3 eine Vorrichtung zur Querverschiebung 5 jedes zweiten, geförderten Schnittgutstücks um eine vorbestimmte Querverschiebungslänge vorgesehen ist. Weiters ist - in Förderrichtung gesehen - nach der Querverschiebungsvorrichtung 5 eine Vorrichtung zur Verhinderung einer Querverschiebung 7 der dazwischenliegenden, entlang der ersten Stapelkante ausgerichteten Schnittgutteile 25 vorgesehen, welche mit einer Ausrichtvorrichtung 6, 8 zur Ausrichtung der um die Querverschiebungslänge verschobenen Schnittgutstücke entlang der zweiten Stapelkante in Wirkzusammenhang steht.

Das erfindungsgemäße Verfahren kann auf der in Fig. gezeigten Anlage ausgeführt werden, welche zum besseren Verständnis in insgesamt fünf Abschnitte unterteilt ist. Es unterscheidet sich von den bekannten Verfahren dadurch, daß die beim Stauquerförderer 1 angestaute Schnittgutlage nicht in Einzelstücke aufgegliedert, dann zick-zack-artig ausgerichtet und anschließend wieder zu Lagen zusammengefaßt wird, sondern es werden die Schnittgutstücke 25 jeder durch die Stauquerförderung aufgestauten Schnittgut-Stapellage 30 unmittelbar nach der Stauquerförderung und während ihrer Förderbewegung in Lagenteilungsabständen angeordnet und die zick-zack-artige Ausrichtung der Schnittgutstücke 25 erfolgt während ihres Weiterquertransportes zur Übergabevorrichtung 9, 10, 11, von wo die Schnittgutlagen 30 auf einen Hubtisch 12 übergeben werden.

Die Anordnung der Stückgutstücke 25 in fertigen Lagen mit kleinen Abständen zwischen den Brettern entsteht durch den Geschwindigkeitsunterschied zwischen dem Zwischenquerförderer 3 und dem Stauquerförderer 1, wodurch die Anordnung der Schnittgutstücke 25 entsprechend aufgelockert wird.

Zur zick-zack-artigen Ausrichtung der Schnittgutstücke 25 während eines Förderabschnitts wird jedes zweite Schnittgutstück 25 einer Lage 30 um eine vorbestimmte Querverschiebungslänge quer zur Förderrichtung verschoben. Dies geschieht über die Querverschiebungsvorrichtung, die aus einem parallel zur Förderrichtung der Anlage entlang eines Abschnitts verschiebbaren Schlitten 5 mit quer zur Förderrichtung ausgerichteten und verschiebbaren Verschiebefingern 21 gebildet ist. Der Schlitten 5 ist dabei in Förderrichtung mit einer der Fördergeschwindigkeit des Zwischenquerförderers 3 entsprechenden Geschwindigkeit und gegen die Förderrichtung mit einer höheren Eilganggeschwindigkeit bewegbar ist.

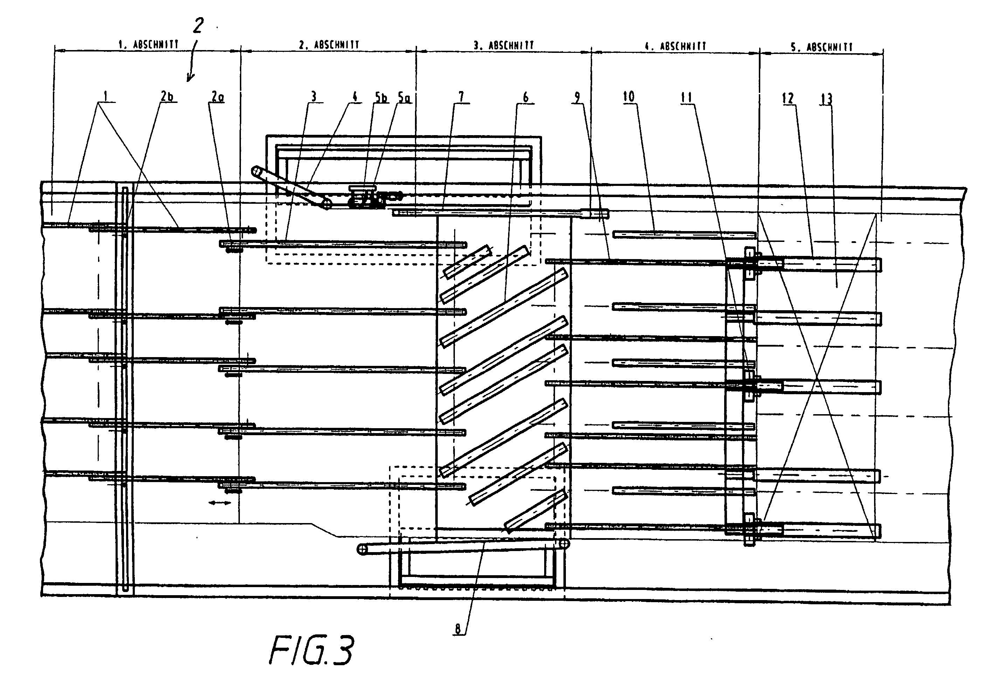

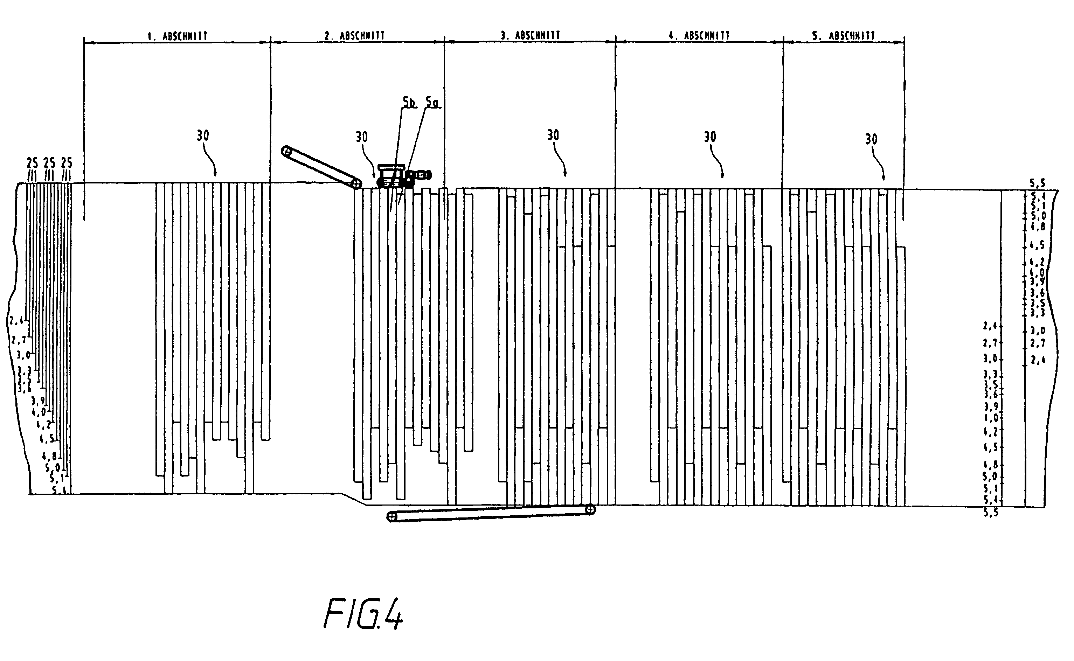

Die Querverschiebungsvorrichtung kann gemäß Fig. 3 und 4 auch mittels einer anderen Konstruktion ausgeführt werden und zwar als rotierende Trommel 5a mit einer darauf montierten schneckenförmigen Einschiebenocke 5b, die sich über einen Umfangswinkel von 180° erstreckt. Mit dieser Vorrichtung wird jedes zweite Schnittgutstück 25 einer vorbeifahrenden Lage 30 um mindestens 100 mm quer zur Förderrichtung verschoben.

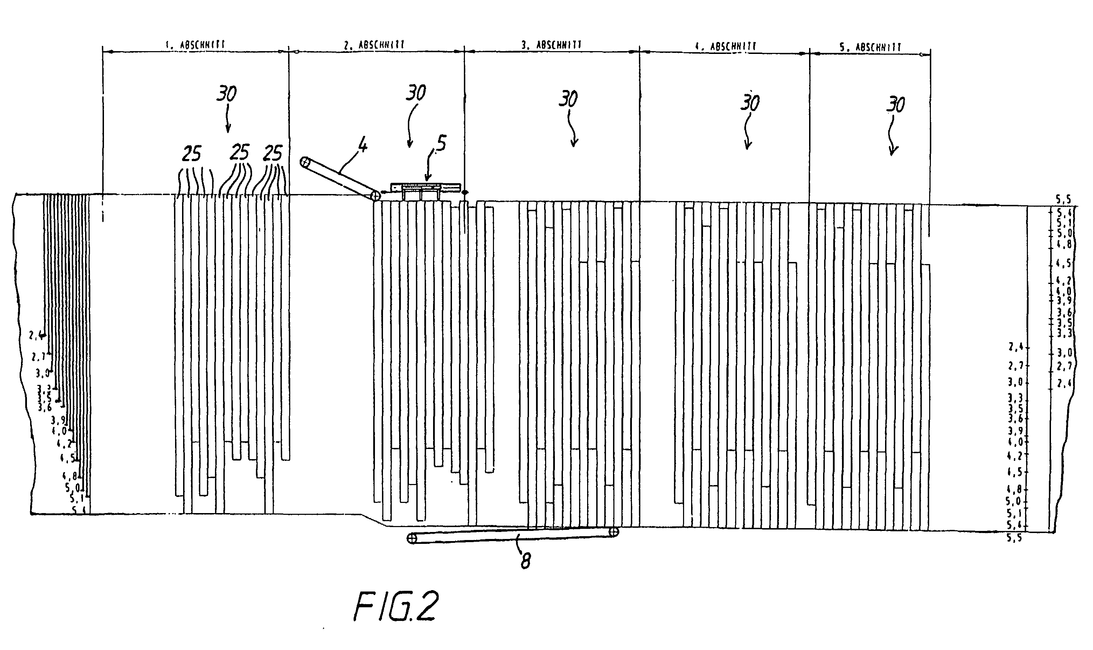

In einem darauffolgenden Förderabschnitt, welcher in den Figuren 1,2 als "3.Abschnitt" bezeichnet ist, werden die dazwischenliegenden, nicht verschobenen Schnittgutstücke 25 gegen ein seitliches Verschieben gesichert, welche dadurch entlang der ersten Stapelkante ausgerichtet bleiben. Dies geschieht mit Hilfe der Vorrichtung zur Verhinderung einer Querverschiebung 7, welche es ermöglicht, daß die Ausrichtvorrichtung 6, 8 die bereits verschobenen Schnittgutstücke entlang der zweiten Stapelkante ausrichtet, ohne daß es dabei zu einer Verschiebung der nach der ersten Stapelkante ausgerichteten Schnittgutenden kommt. Die so ausgerichteten Stapellagen 30 werden der Übergabevorrichtung 9, 10, 11 zugeführt.

Vor der Übergangsstelle zwischen dem, vorzugsweise mehrarmigen, Stauquerförderer 1 und dem Zwischenquerförderer 3, welche sich im als "1.Abschnitt" bezeichneten Teil der erfindungsgemäßen Anlage befindet, ist eine Lagenbildungsvorrichtung 2 vorgesehen ist, welche zusätzlich zu den, vorzugsweise absenkbaren, Anschlägen 2a eine Klemmvorrichtung 2b aufweist.

Wenn durch den Anstau der Schnittgutstücke 25 die erforderliche Anzahl für eine Lage 30 erreicht wird, dies entspricht ungefähr einer Länge von 2m, wird die Klemmvorrichtung aktiviert, die Anschläge 2a abgesenkt und die fertige Lage auf den nachfolgenden Zwischenförderer 3 im als "2.Abschnitt" bezeichneten Teil der Anlage übergeben, wobei der Zwischenquerförderer vorzugsweise aus einem Dachkettenförderer 3 gebildet ist. Schon am Beginn des Dachkettenförderers 3 werden die Schnittgutteile 25 durch eine Einweisvorrichtung, die vorzugsweise aus einem in schrägem Winkel zur Förderrichtung angestellten Einweisförderband 4 gebildet ist, genau auf die erste Brettausrichtkante eingewiesen, die der ersten Stapelkante entspricht, welche sich in Fig.1, 2 oben befindet.

Wenn die so geförderte und eingerichtete Stapellage 30, wie auch aus Fig.2 ersichtlich, mit der Vorderkante in den Bereich der Querverschieberichtung 5 gelangt, wird diese durch eine nicht dargestellte Lichtschranke ausgelöst, wodurch der Wagen 5 der Querschiebevorrichtung mit seinem Verschiebevorgang beginnt. Je nach Breite des Schnittgutes werden 4, 3 oder 2 Schnittgutstücke gleichzeitig mit Hilfe der Verschiebefinger 21 um die vorbestimmbare Querverschiebungslänge, z.B. um 100mm, gemessen von der Brettausrichtkante bzw. der ersten Stapelkante, verschoben. Dabei ist aber nur jedes zweite Schnittgutstück 25 von der Verschiebung betroffen, während die dazwischenliegenden Schnittgutstücke 25 entlang der ersten Stapelkante ausgerichtet bleiben. Während des Verschiebungsvorganges läuft der Wagen 5 der Querverschiebevorrichtung mit derselben Fördergeschwindigkeit wie die des Zwischenquerförderers 3 mit und nach Beendigung des Einschiebens wird dieser im Eilgang in die Ausgangsstellung zurückbefördert.

Die Abstände zwischen den Verschiebefingern 21 richten sich nach der Schnittgutbreite und können bei jedem Sortimentwechsel vorzugsweise automatisch richtig eingestellt werden.

Die Verschiebung der Schnittgutstücke 25 erfolgt in der Ausführungsform gemäß Fig.3 und Fig.4 mittels einer auf einer Trommel 5a angebrachten Einschiebenocke 5b.

Im 3. Abschnitt der erfindungsgemäßen Anlage findet die Ausrichtung der zwischen den entlang der ersten Stapelkante ausgerichteten Schnittgutenden liegenden Schnittgutstücke 25 nach der zweiten Stapelkante statt. Zu diesem Zweck ist die Ausrichtvorrichtung aus einem schräg zur Förderrichtung verlaufenden Ausrichtrollengang 6 und einem seitlich zu dieser, vorzugsweise schräg, angeordneten Anschlagförderband 8 gebildet, wobei die bereits verschobenen Schnittgutstücke 25 in Richtung zur zweiten Stapelkante verschoben werden, welche durch das Anschlagförderband 8 definiert ist.

Die jeweilige Schnittgutlage 30 mit den bereits um jeweils 100mm querverschobenen Schnittgutstücken 25 wird dabei vom Dachkettenförderer 3 auf den Ausrichtrollengang 6 übergeben, wobei beide Förderer 3, 6 dieselbe Fördergeschwindigkeit haben.

Die zwischen den querverschobenen Schnittgutstücken 25 befindlichen Schnittgutstücke 25 werden durch einen Rückhalte-Kettenquerförderer 7 während des Durchlaufens geklemmt und verbleiben dadurch entlang der ersten Stapelkante ausgerichtet. Die übrigen bereits vorverschobenen Schnittgutstücke werden mit Hilfe des Ausrichtrollengangs 6 in Richtung zur zweiten Stapelkante solange querverschoben bis diese an dem Anschlagförderband 8 in Anlage geraten, sodaß nun die gewünscht zick-zack-artige Ausrichtung vorliegt, ohne daß dabei eine Unterbrechung der Förderung eingetreten wäre.

Nunmehr gelangt das zick-zack-artig ausgerichtete Schnittgut 25 in den "4.Abschnitt", in welchem sich die Übergabevorrichtung befindet, die einen, vorzugsweise mehrarmigen, Lagenübergabe-Querförderer 9, eine, vorzugsweise mehrarmige, Übergabezunge 10 und einen Schieber 11 zur Ausrichtung der längsseitigen Stapelkante umfaßt, wobei der Lagenübergabe-Querförderer 9 mit der Geschwindigkeit des Stauquerförderers 1 bewegbar ist, sodaß die Schnittgutstücke wieder aneinander anschließen.

Wenn die jeweilige Schnittgutlage 30 mit ihrer Vorderkante eine nicht dargestellte Lichtschranke erreicht, startet die mehrarmige Übergabezunge 10 und übergibt diese Lage an den Stapel-Hubtisch 12. Die Übergabezunge 10 weist um eine Längsachse schwenkbare Arme auf, die auf der nach oben geschwenkten Kante mit einer griffigen Verzahnung versehen sind, und die die jeweilige Schnittgutlage 30 über das Förderniveau heben und dann erst eine Längsausfahrbewegung in Richtung zum Stapel-Hubtisch 12 ausführen. In ihrer ausgefahrenen Endstellung schwenken die Arme wieder nach unten und verbleiben einen Augenblick lang in dieser Stellung, in welcher mit dem Schieber 11 die Schnittgutlage 25 auf Ihrer - in Förderrichtung gesehen - Rückseite auf eine definierte Kante ausrichtet. Dieser Vorgang richtet die längsseitige Stapelkante.

Der "5.Abschnitt" besteht schließlich aus dem Stapel-Hubtisch 12 und einer automatischen Lattenlegevorrichtung 13. Während des kurzzeitigen Stillstandes der Übergabezunge 10 übergibt die Lattenlegevorrichtung 13 Distanzlatten mit einer vorbestimmbaren Aufteilung auf die Oberseite der betreffenden Schnittgutlage. Gleichzeitig fährt von oben ein nicht dargestellter, mehrarmiger Rechen herab, dessen Rechenzinken teilweise auf der Oberseite der Schnittgutlage aufsetzen und teilweise in die Lücken zwischen die Schnittgutstücke fahren und so diese Stapellage festhalten. Anschließend daran fährt die Übergabezunge 10 wieder in ihre Ausgangsstellung, wodurch die Schnittgutlage samt den Distanzlatten auf dem Hubtisch 12 oder auf einen bereits begonnenen Stapel abgelegt wird. Danach senkt sich der Stapel-Hubtisch 12 um die Summe aus Schnittgutstärke und Lattenstärke ab und ein neuer Übergabetakt kann ausgeführt werden.

Mit Hilfe eines in den Zeichnungen nicht ersichtlichen Verschieberahmens kann die Länge des Stapels bzw. der Schnittgutlage um einen bestimmten Betrag, z.B. 900 oder 1000 mm verkürzt werden. Beträgt die Stapellänge zum Beispiel 5500 mm bei einer maximalen Schnittgutstücklänge von 5400 mm kann mit dieser Umstellung also eine Stapellänge von 4600 mm bei einer maximalen Schnittgutstücklänge von 4500 mm eingestellt werden. Eine solche Umstellung kann aufgrund verschiedener Trockenkammerdimensionen erforderlich sein.

Um die Verstellung ausführen zu können, sind das Einweisförderband 4, die Querverschiebungsvorrichtung 5 und die Vorrichtung zur Verhinderung einer Querverschiebung 7 auf dem Verschieberahmen befestigt. Mit diesem kann eine Verschiebung der vorgenannten Vorrichtungen z.B. um 450 mm bzw. 500 mm in Richtung Mitte der Anlage vorgenommen werden.

Auf der anderen Seite der Anlage ist das Anschlagförderband 8 mit Teilen des Ausrichtrollenganges 6 ebenfalls auf einem gemeinsamen Verschieberahmen aufgebaut und dieser kann ebenfalls um das vorgenannte Maß zur Mitte der Anlage hin verschoben werden.

## Patentansprüche

1. Verfahren zur Bildung von Kastenstapeln für Schnittgut, vorzugsweise kantige Holzbretter, mit unterschiedlicher Länge, wobei das Schnittgut durch Stauquerförderung zu Lagen gesammelt wird und die stimseitigen Enden des Schnittguts abwechselnd nach einer ersten und nach einer zweiten Stapelkante ausgerichtet werden, wodurch zick-zack-artige Lagen gebildet werden, welche durch eine Übergabevorrichtung auf einem Stapeltisch, vorzugsweise unter Zwischenlage von Distanzlatten, gestapelt werden, **dadurch gekennzeichnet, daß** die Schnittgutstücke (25) jeder durch die Stauquerförderung aufgestauten Schnittgut-Stapellage (30) unmittelbar nach der Stauquerförderung und während ihrer Förderbewegung in fertigen Lagen gesammelt und transportiert werden, und daß die zick-zack-artige Ausrichtung der Schnittgutstücke (25) während ihres Weitertransportes zur Übergabevorrichtung erfolgt, wobei zur zick-zack-artigen Ausrichtung der Schnittgutstücke (25) während eines Förderabschnitts jedes zweite Schnittgutstück (25) einer Lage (30) um eine vorbestimmte Querverschiebungslänge quer zur Förderrichtung verschoben wird, daß in einem darauffolgenden Förderabschnitt die dazwischenliegenden, nicht verschobenen Schnittgutstücke (25) gegen ein seitliches Verschieben gesichert werden, welche dadurch entlang der ersten Stapelkante ausgerichtet bleiben, daß die zuvor um eine vorbestimmbare Distanz verschobenen Schnittgutstücke (25) durch eine Ausrichtvorrichtung (6, 8) entlang der zweiten Stapelkante ausgerichtet werden, und daß die so ausgerichteten Stapellagen (30) der Übergabevorrichtung (9, 10, 11) zugeführt werden.

2. Anlage zur Bildung von Kastenstapeln mit einer ersten und einer zweiten Stapelkante für Schnittgut, vorzugsweise, Holzbretter, mit einem Stauquerförderer, einer Anschlagvorrichtung, einem an diese anschließenden Zwischenquerförderer, einer Übergabevorrichtung und einem Stapeltisch, insbesondere nach dem Anspruch 1, **dadurch gekennzeichnet, daß** der Zwischenquerförderer (3) eine höhere Fördergeschwindigkeit als der Stauquerförderer (1) aufweist, daß auf einer Seite des Zwischenquerförderers (3) eine Vorrichtung zur Querverschiebung (5) jedes zweiten Schnittgutstücks um eine vorbestimmte Querverschiebungslänge vorgesehen ist, daß - in Förderrichtung gesehen - nach der Querverschiebungsvorrichtung (5) eine Vorrichtung zur Verhinderung einer Querverschiebung (7) der dazwischenliegenden, entlang der ersten Stapelkante ausgerichteten Schnittgutteile (25) vorgesehen ist, welche mit einer Ausrichtvorrichtung (6, 8) zur Ausrichtung der um die Querverschiebungslänge verschobenen Schnittgutstücke entlang der zweiten Stapelkante in Wirkzusammenhang steht.

3. Anlage nach Anspruch 2, **dadurch gekennzeichnet, daß** vor der Übergangsstelle zwischen dem, vorzugsweise mehrarmigen, Stauquerförderer (1) und dem Zwischenquerförderer (3) eine Lagenbildungsvorrichtung (2) vorgesehen ist, welche senkbare, in Förderrichtung verstellbare Anschläge und eine im Abstand einer Lagenbreite angeordnete Klemmvorrichtung aufweist.

4. Anlage nach Anspruch 2 oder 3, **dadurch gekennzeichnet, daß** der Zwischenquerförderer aus einem Dachkettenförderer (3) gebildet ist, und daß seitlich des Dachkettenförderers (3) eine Einweisvorrichtung, vorzugsweise ein in schrägem Winkel zur Förderrichtung angestelltes Einweisförderband (4), angeordnet ist, die eine Ausrichtung der Stückgutteile (25) entlang der ersten Stapelkante vornimmt.

5. Anlage nach einem der Ansprüche 2, 3 oder 4, **dadurch gekennzeichnet, daß** die Querverschiebungsvorrichtung aus einem parallel zur Förderrichtung der Anlage entlang eines Abschnitts verschiebbaren Schlitten (5) mit quer zur Förderrichtung ausgerichteten und verschiebbaren Verschiebefingern (21) gebildet ist, welcher Schlitten (5) in Förderrichtung mit einer der Fördergeschwindigkeit des Zwischenquerförderers (3) entsprechenden Geschwindigkeit und gegen die Förderrichtung mit einer höheren Eilganggeschwindigkeit bewegbar ist.

6. Anlage nach einem der Ansprüche 2, 3 oder 4, **dadurch gekennzeichnet, daß** die Querverschiebevorrichtung aus einer parallel zur Förderrichtung rotierbaren Trommel (5a) mit einer darauf angebrachten, schneckenförmigen Einschiebenocke (5b) gebildet ist, die jedes zweite Schnittgutstück quer zur Förderrichtung verschiebt und wobei der Umfang der Einschiebnocke sich mit einer der Fördergeschwindigkeit des Zwischenquerförderers (3) entsprechenden Geschwindigkeit bewegt.

7. Anlage nach einem der Ansprüche 2 bis 6, **dadurch gekennzeichnet, daß** die Ausrichtvorrichtung aus einem schräg zur Förderrichtung verlaufenden Ausrichtrollengang (6) und einem seitlich zu diesem, vorzugsweise schräg, angeordneten Anschlagförderband (8) gebildet ist, wobei die bereits verschobenen Schnittgutstücke (25) in Richtung zur zweiten Stapelkante verschoben werden, welche durch das Anschlagförderband (8) definiert ist.

8. Anlage nach einem der Ansprüche 2 bis 7, **dadurch gekennzeichnet, daß** die Übergabevorrichtung einen, vorzugsweise mehrarmigen, Lagenübergabe-Querförderer (9), eine, vorzugsweise mehrarmige, Übergabezunge (10) und einen Schieber (11) zur Ausrichtung der längsseitigen Stapelkante umfaßt, wobei der Lagenübergabe-Querförderer (9) mit der Geschwindigkeit des Stauquerförderers (1) bewegbar ist.

9. Anlage nach einem der vorhergehenden Ansprüche 2 bis 8, **dadurch gekennzeichnet, daß** das Einweisförderband (4), die Querverschiebungsvorrichtung (5) und die Vorrichtung zur Verhinderung der Querverschiebung (7) sowie das Anschlagförderband (8) mit Teilen der Ausrichtvorrichtung (6) jeweils auf einem gemeinsamen Verschieberahrnen befestigt sind.

## Claims

1. A method for forming box-type stacks of workpieces to be cut, preferably wooden planks with edges and of different length, with the workpieces to be cut being collected by transversal stowing conveyance into layers and the face-side ends of the workpieces being aligned alternatingly according to a first and second stacking edge, thus forming zigzag-like layers which are stacked on a stacking table by a transfer device, preferably by interposing spacer battens, **characterized in that** the workpieces (25) to be cut of every stacked position (30) of workpieces as stowed by transversal stowing conveyance are collected and conveyed in completed layers directly after transversal stowing conveyance and during their conveying movement, and that the zigzag-like alignment of the workpieces (25) occurs during their further conveyance to the transfer apparatus, with every other workpiece (25) of a layer (30) being displaced by a predetermined transversal displacement length transversally to the direction of conveyance for the purpose of the zigzag-like alignment of the workpieces (25) during a conveying section, that in a subsequent conveying section the interposed workpieces (25) which were not displaced are secured against lateral displacement, which as a result remain aligned along the first stacking edge, that the workpieces (25) which were previously displaced by a predeterminable distance are aligned by an alignment apparatus (6, 8) along the second stacking edge and that the thus aligned layers of stacks (30) are thus supplied to the transfer apparatus (9, 10, 11).

2. An installation for forming box-type stacks with a first and second stacking edge for workpieces to be cut, preferably wooden planks, comprising a transversal stowing conveyor, a limit stop apparatus, a transversal intermediate conveyor which is adjacent thereto, a transfer apparatus and a stacking table, especially according to claim 1, **characterized in that** the transversal intermediate conveyor (3) has a higher conveying speed than the transversal stowing conveyor (1), that an apparatus for the transversal displacement (5) of every other workpiece by a predetermined transversal displacement length is provided on one side of the transversal intermediate conveyor (3), that after the transversal displacement apparatus (5) - as seen in the conveying direction - an apparatus is provided for preventing the transversal displacement (7) of the interposed workpieces (25) which are aligned along the first stacking edge, which apparatus is in operative connection with an alignment apparatus (6, 8) for aligning the workpieces displaced by the transversal displacement length along the second stacking edge.

3. An installation as claimed in claim 2, **characterized in that** a layer forming apparatus (2) is provided before the transfer position between the preferably multiple-arm transversal stowing conveyor (1) and the transversal intermediate conveyor (3), which layer forming apparatus comprises lowerable stops which are adjustable in the conveying direction and a clamping apparatus which is arranged at the distance of one layer width.

4. An installation as claimed in claim 2 or 3, **characterized in that** the transversal intermediate conveyor is formed by a roof chain conveyor (3) and that a guide apparatus, preferably a guide conveyor belt (4) which is set at an oblique angle to the direction of conveyance, is arranged laterally to the roof chain conveyor (3), which guide apparatus performs an alignment of the workpieces (25) along the first stacking edge.

5. An installation as claimed in one of the claims 2, 3 or 4, **characterized in that** the transversal displacement apparatus is formed by a carriage (5) which is displaceable parallel to the direction of conveyance of the installation along a section and by displaceable displacement fingers (21) which are aligned transversally to the direction of conveyance, which carriage (5) can be moved in the conveying direction with a speed corresponding to the conveying speed of the transversal intermediate conveyor (3) and with a higher rapid-motion speed against the direction of conveyance.

6. An installation as claimed in one of the claims 2, 3 or 4, **characterized in that** the transversal displacement apparatus is formed by a drum (5a) which is rotatable parallel to the conveying direction and comprises a worm-like slide-in cam (5b) which is attached thereon and which displaces every other workpiece transversally to the conveying direction, with the circumference of the slide-in cam moving with a speed corresponding to the conveying speed of the transversal intermediate conveyor (3).

7. An installation as claimed in one of the claims 2 to 6, **characterized in that** the alignment apparatus is formed by an aligning roller table (6) which extends inclined to the conveying direction and by a stop conveyor belt (8) which is arranged laterally to the same and preferably in an inclined way, with the workpieces (25) which have already been displaced are displaced in the direction towards the second stacking edge which is defined by the stop conveyor belt (8).

8. An installation as claimed in one of the claims 2 to 7, **characterized in that** the transfer apparatus comprises a preferably multiple-arm layer-transfer transversal conveyor (9), a preferably multiple-arm transfer tongue (10) and a slider (11) for aligning the stacking edge on the longitudinal side, with the layer-transfer transversal conveyor (9) being movable with the speed of the transversal stowing conveyor (1).

9. An installation as claimed in one of the preceding claims 2 to 8, **characterized in that** the guide conveyor belt (4), the transversal displacement apparatus (5) and the apparatus for preventing the transversal displacement (7) and the stop conveyor belt (8) are each fastened with parts of the alignment apparatus (6) to a common sliding frame.

## Revendications

1. Procédé pour la formation de piles rectangulaires de matériau découpé, de préférence des planches en bois anguleuses, de différentes longueurs, dans lequel le matériau découpé est collecté par un transport transversal à accumulation pour former des épaisseurs et les extrémités frontales du matériau découpé sont orientées alternativement vers un bord de la pile et vers un deuxième, ce qui forme des épaisseurs en zigzag qui sont empilées par un dispositif de dépose sur un plateau d'empilage, en intercalant de préférence des lattes d'écartement, **caractérisé en ce que** les pièces de matériau découpé (25) de chaque épaisseur d'empilage de matériau découpé (30) accumulée par le transport transversal à accumulation sont recueillies et transportées en formant des épaisseurs finies immédiatement après le transport transversal à accumulation et pendant leur mouvement de transport, et **en ce que** l'orientation en zigzag des pièces de matériau découpé (25) est réalisée pendant la suite de leur transport vers le dispositif de dépose, l'orientation en zigzag des pièces de matériau découpé (25) étant réalisée en déplaçant pendant un tronçon de transport une pièce de matériau découpé (25) sur deux dans une épaisseur (30) sur une longueur de translation transversale prédéterminée perpendiculairement au sens de transport, en fixant pendant un tronçon de transport suivant les pièces de matériau découpé (25) non déplacées intermédiaires pour empêcher leur translation latérale et les maintenir ainsi alignées sur le premier bord de la pile, en orientant les pièces de matériau découpé (25) précédemment déplacées d'une distance pouvant être prédéterminée le long du deuxième bord de la pile à l'aide d'un dispositif d'orientation (6, 8) et en acheminant les épaisseurs d'empilage orientées (30) vers le dispositif de dépose (9, 10, 11).

2. Installation pour la formation de piles rectangulaires de matériau découpé avec un premier bord de pile et un deuxième pour des matériaux découpés, de préférence des planches de bois, avec un transporteur transversal à accumulation, un dispositif de butée, un convoyeur latéral intermédiaire faisant suite à celui-ci, un dispositif de dépose et un plateau d'empilage, en particulier selon la revendication 1, **caractérisée en ce que** le transporteur transversal intermédiaire (3) fonctionne à une vitesse plus élevée que le transporteur transversal à accumulation (1), **en ce qu'**il est prévu sur un côté du transporteur transversal intermédiaire (3) un dispositif pour la translation transversale (5) d'une pièce de matériau découpé sur deux sur une longueur de translation prédéterminée, **en ce qu'**il est prévu après le dispositif de translation transversale (5), dans le sens du transport, un dispositif empêchant une translation transversale (7) des pièces de matériau découpé (25) intermédiaires alignées sur le premier bord de la pile, qui coopère avec un dispositif d'orientation (6, 8) destiné à orienter les pièces de matériau découpé déplacées sur la longueur de translation le long du deuxième bord de la pile.

3. Installation selon la revendication 2, **caractérisée en ce qu'**il est prévu avant le point de dépose, entre le transporteur transversal à accumulation (1) comprenant de préférence plusieurs bras et le transporteur transversal intermédiaire (3), un dispositif de formation d'épaisseurs (2) présentant des butées pouvant être abaissées et mobiles dans le sens du transport et un dispositif de serrage disposé à la distance d'une largeur d'épaisseur.

4. Installation selon la revendication 2 ou 3, **caractérisée en ce que** le transporteur transversal intermédiaire est formé d'un transporteur à chaîne à chevrons (3) et **en ce qu'**il est prévu sur le côté du convoyeur à chaîne à chevrons (3) un dispositif d'insertion, de préférence un convoyeur à bande d'insertion (4) formant de préférence un angle oblique avec le sens de transport, qui réalise une orientation des pièces de matériau découpé (25) le long du premier bord de la pile.

5. Installation selon l'une quelconque des revendications 2, 3 ou 4, **caractérisée en ce que** le dispositif de translation transversale est formé d'un chariot (5) mobile perpendiculairement au sens de transport de l'installation le long d'un tronçon, avec des pattes de translation (21) mobiles et orientées perpendiculairement au sens de transport, lequel chariot (5) est mobile dans le sens de transport à une vitesse correspondant à la vitesse de transport du transporteur transversal intermédiaire (3) et en sens inverse du sens de transport à une vitesse accélérée plus élevée.

6. Installation selon l'une quelconque des revendications 2, 3 ou 4, **caractérisée en ce que** le dispositif de translation transversale se compose d'un tambour (5a) rotatif parallèlement au sens de transport sur lequel est installée une came d'insertion (5b) hélicoïdale qui décale une pièce de matériau découpé sur deux perpendiculairement au sens de transport, et dans lequel la circonférence de la came d'insertion se déplace à une vitesse correspondant à la vitesse de transport du transporteur transversal intermédiaire (3).

7. Installation selon l'une quelconque des revendications 2 à 6, **caractérisée en ce que** le dispositif d'orientation est formé d'un convoyeur à rouleaux d'orientation (6) orienté en oblique par rapport au sens de transport et d'un convoyeur à bande de butée (8) disposé latéralement, de préférence en oblique, par rapport à celui-ci, les pièces de matériau découpé (25) déjà déplacées étant déplacées en direction du deuxième bord de la pile, qui est défini par le convoyeur à bande de butée (8).

8. Installation selon l'une quelconque des revendications 2 à 7, **caractérisé en ce que** le dispositif de dépose est formé d'un convoyeur transversal de dépose d'épaisseurs (9), de préférence à plusieurs bras, d'une patte de dépose (10), de préférence à plusieurs bras, et d'un poussoir (11) destiné à orienter le bord longitudinal de la pile, le convoyeur transversal de dépose d'épaisseurs (9) pouvant être déplacé à la vitesse du convoyeur transversal d'accumulation (1).

9. Installation selon l'une quelconque des revendications 2 à 8, **caractérisée en ce que** le convoyeur à bande d'insertion (4) , le dispositif de translation transversale (5) et le dispositif empêchant la translation transversale (7) ainsi que le convoyeur à bande de butée (8) sont fixés chacun sur un cadre de translation commun avec des éléments du dispositif d'orientation (6).
